# EUROPEAN PATENT APPLICATION

(11) **EP 3 972 080 A1**
(43) Date of publication of application: **23.03.2022**
(21) Application number: 20197247.8
(22) Date of filing: 21.09.2020
(51) Int. Cl.: H02J 7/35

(54) **STORAGE UNIT FOR A PHOTOVOLTAIC SYSTEM**

(71) Applicant: Fronius International GmbH, 4643 Pettenbach (AT)
(72) Inventor: Guschlbauer, Florian, 4643 Pettenbach (AT); Pfaffenbichler, Dominik, 4643 Pettenbach (AT)
(74) Representative: Isarpatent

(57) **Abstract**

A photovoltaic system (1) comprising at least one storage unit (6) having one or more storage modules (7) each adapted to store electrical power characterized by an emergency shutdown control unit (5) adapted to initiate automatically a shutdown and/or reduce a voltage level of at least one of the storage modules (7) to provide a safe operation of said at least one storage module (7) if an emergency state of said photovoltaic system (1) is determined on the basis of one or more external trigger signals.

## Description

The invention relates to a photovoltaic system having at least one storage unit adapted to store electrical power and comprising an emergency shutdown control unit.

A photovoltaic system is provided to convert solar radiation into usable electrical power. A photovoltaic system comprises photovoltaic modules which can be arranged in an array to generate electrical direct current DC current. The generated electrical DC current is converted by an inverter unit into AC power which can be supplied to a public power supply grid. The AC power generated by the inverter unit can further be used locally to supply loads of a local load network with energy. A conventional photovoltaic system can comprise also one or more storage units which can store electrical power locally. The storage unit is also connected to the inverter unit. The inverter unit can convert a DC current provided by the storage unit into AC power that might be either fed into the power supply grid or used for supplying the local electrical loads of the load network, in particular if the photovoltaic modules of the photovoltaic array do not generate sufficient DC. Further, the power stored in the storage unit can be used if a power supply grid failure is detected to supply entities of the photovoltaic system with energy, for instance a controller integrated in the inverter unit. However, in a conventional photovoltaic system, in an emergency situation such as fire, the voltage provided by the storage modules of the storage unit of the photovoltaic system may be safety-critical, in particular for fire fighters trying to extinguish the fire at the location of the photovoltaic system. In particular, in cases where a storage unit comprises a plurality of storage modules, the DC voltage of the storage unit might provide a risk for users in an emergency situation.

Accordingly, it is an object of the present invention to provide a photovoltaic system including such a storage unit where the security for users in an emergency state of the photovoltaic system is increased.

This object is achieved by a photovoltaic system comprising the features of claim 1.

The invention provides according to a first aspect a photovoltaic system comprising
at least one storage unit having one or more storage modules each adapted to store electrical power wherein the photovoltaic system is characterized in that it comprises an emergency shutdown control unit adapted to initiate automatically a shutdown or reduces a voltage level of at least one of the storage modules to provide a safe operation of the at least one storage module if an emergency state of said photovoltaic system is determined on the basis of one or more external trigger signals.

In a possible embodiment of the photovoltaic system according to the first aspect of the present invention, the emergency shutdown control unit comprises a transceiver connected via a direct current line to an inverter unit of said photovoltaic system.

In a further possible embodiment of the photovoltaic system according to the first aspect of the present invention, the inverter unit of the photovoltaic system comprises an integrated controller adapted to receive the one or more external trigger signals via at least one interface of the inverter unit from corresponding signal sources.

In a further possible embodiment of the photovoltaic system according to the first aspect of the present invention, the controller of the inverter unit is adapted to process the received one or more external trigger signals to determine whether the photovoltaic system is in an emergency state.

In a further possible embodiment of the photovoltaic system according to the first aspect of the present invention, the controller of the inverter unit is adapted to notify the emergency shutdown control unit about the emergency state of the photovoltaic system by means of powerline communication PLC via the DC line provided between the inverter unit and a PLC transceiver of the emergency shutdown control unit.

In a still further possible embodiment of the photovoltaic system according to the first aspect of the present invention, the emergency shutdown control unit is integrated in the storage unit.

In a further possible embodiment of the photovoltaic system according to the first aspect of the present invention, the emergency shutdown control unit is connected to the storage unit.

In a further possible embodiment of the photovoltaic system according to the first aspect of the present invention, the storage unit comprises a plurality of stacked storage modules disconnectable from each other via separation switch units controlled by the emergency shutdown control unit.

In a still further possible embodiment of the photovoltaic system according to the first aspect of the present invention, each separated storage module provides a maximum voltage above a predefined safety threshold voltage.

In a further possible embodiment of the photovoltaic system according to the first aspect of the present invention, the one or more external trigger signals are generated by different distributed signal sources and supplied directly or indirectly via the controller of the inverter unit to the emergency shutdown control unit of the storage unit within the photovoltaic system.

In a still further possible embodiment of the photovoltaic system according to the first aspect of the present invention, the one or more external trigger signals comprise sensor signals generated by local or remote sensors.

In a further possible embodiment of the photovoltaic system according to the first aspect of the present invention, the one or more external trigger signals comprise control signals generated by local or remote control units and/or generated by local or remote user interfaces.

In a still further possible embodiment of the photovoltaic system according to the first aspect of the present invention, the emergency state of the photovoltaic system is notified by the controller of the inverter unit to the emergency shutdown control unit if a transmission signal transmitted periodically by the controller of the inverter unit to the transceiver of the emergency shutdown control unit is no longer received by the transceiver of the emergency shutdown control unit for a predefined time period.

In a still further possible embodiment of the photovoltaic system according to the first aspect of the present invention, the emergency shutdown control unit is adapted to process the external trigger signals received from a logic evaluation to determine whether the photovoltaic system is in an emergency state.

The invention further provides according to a further aspect a storage unit comprising the features of claim 13.

The invention provides according to the second aspect a storage unit used in a photovoltaic system according to the first aspect of the present invention wherein the storage unit comprises one or more storage modules adapted to store electrical power and comprises
an emergency shutdown control unit adapted to initiate automatically a shutdown or reduce a voltage level of the storage modules of the at least one of storage unit to provide a safe operation of the at least one storage module if an emergency state of said photovoltaic system is determined by the emergency shutdown control unit on the basis of one or more external trigger signals.

In a possible embodiment of the storage unit according to the second aspect of the present invention, the emergency shutdown control unit of the storage unit comprises a PLC transceiver adapted to perform PLC communication with a controller of the inverter unit of said photovoltaic system.

The invention provides according to a further aspect a method for safe operation of a photovoltaic system comprising the features of claim 15.

The invention provides according to a third aspect a method for safe operation of a photovoltaic system comprising the steps of:
processing one or more external trigger signals received from one or more signal sources to determine whether the photovoltaic system is in an emergency state and
performing automatically a shutdown or a reduction of a voltage level of at least one storage module of a storage unit of said photovoltaic system if an emergency state of the photovoltaic system is determined to provide a safe operation of the at least one storage module during the determined emergency state of said photovoltaic system.

In the following, possible embodiments of the different aspects of the present invention are described in more detail with reference to the enclosed figures.
- Fig. 1: shows a block diagram for illustrating a possible exemplary embodiment of a photovoltaic system according to the first aspect of the present invention;
- Fig. 2: shows a flowchart for illustrating a possible exemplary embodiment of a method for safe operation of a photovoltaic system according to a further aspect of the present invention.

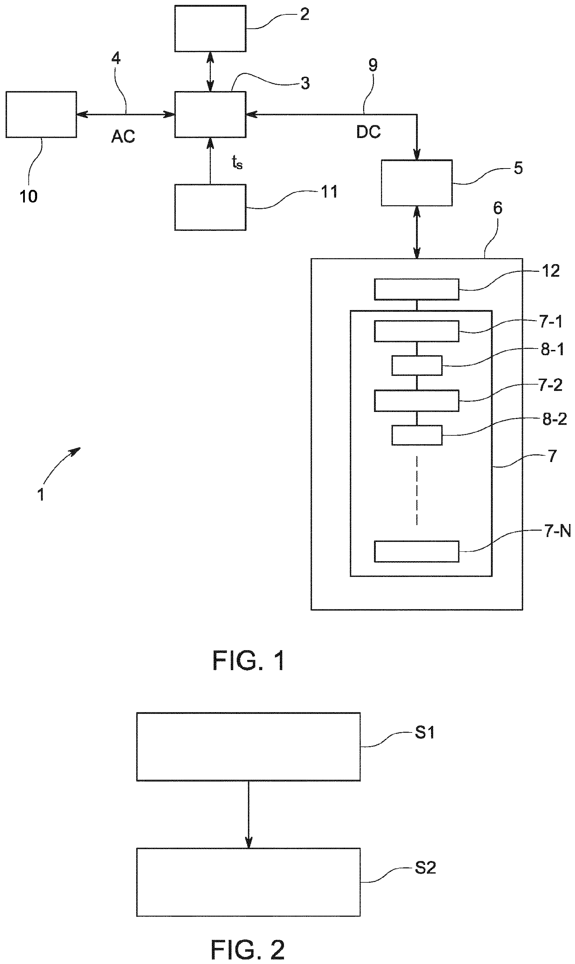

Fig. 1 shows a possible embodiment of a photovoltaic system 1 according to the first aspect of the present invention. In the illustrated embodiment, the photovoltaic system 1 comprises at least one photovoltaic array 2 having photovoltaic modules adapted to generate a direct current DC power from solar radiation. The photovoltaic system 1 further comprises an inverter unit 3 adapted to convert the DC power generated by the photovoltaic array PVA 2 into an alternating current AC power connected via AC lines 4 to a power supply grid. A smart meter device can be provided to measure parameters of the power supply grid PSG 10 and to provide a controller of the inverter unit 3 with smart meter data. The smart meter data are, for example, a voltage value, a current value, frequency details, energy details associated with the PSG 10, etc. The smart meter device is not explicitly shown in Fig. 1. The inverter unit 3 is further connected via DC lines to an emergency shutdown control unit 5 as illustrated in Fig. 1. The emergency shutdown control unit 5 can in a possible implementation be integrated or attached to a storage unit 6 of the photovoltaic system 1. The storage unit 6 has one or more storage modules 7 adapted to store electrical energy. In a possible embodiment, the storage unit 6 comprises a plurality of stacked storage modules 7. The stacked storage modules 7 can be disconnected from each other in a possible embodiment via separation switch units 8 controlled by the emergency shutdown control unit 5. The storage modules 7 can also be connected in parallel to each other within the storage unit 6. The storage modules 7 can connected as a combination of series and parallel groups based on customers' requirements. As shown in Fig. 1, the storage unit 6 comprises a management system 12. The management system 12, for example, monitors the storage modules 7 and controls charging and discharging of the storage modules 7 of the storage unit 6.

The photovoltaic system 1 comprises one or more storage units 6 each having one or more storage modules 7. The emergency shutdown control unit 5 of the photovoltaic system 1 is adapted to initiate automatically a shutdown or a reduction of a voltage level of at least one of the storage modules 7 to provide a safe operation of the storage modules 7 if an emergency state of the photovoltaic system 1 is determined on the basis of one or more received external trigger signals ts.

In the illustrated embodiment of Fig. 1, the emergency shutdown control unit 5 comprises in a preferred embodiment a transceiver connected via a direct current, DC, line 9 to the inverter unit 3 of the photovoltaic system 1. The inverter unit 3 of the photovoltaic system 1 can comprise an integrated controller. The integrated controller is not explicitly shown in the Fig. 1. The controller of the inverter unit 3 is adapted in a possible embodiment of the photovoltaic system 1 to receive one or more external trigger signals ts via at least one interface of the inverter unit 3 from corresponding signal sources 11. The controller of the inverter unit 3 is adapted to process the received one or more external trigger signals ts to determine whether the photovoltaic system 1 is in an emergency state. The controller of the inverter unit 3 is adapted to notify the emergency shutdown control unit 5 about the detected emergency state of the photovoltaic system 1 by means of powerline communication PLC via the DC line 9 provided between the inverter unit 3 and a PLC transceiver which can be integrated in the emergency shutdown control unit 5.

The emergency shutdown control unit 5 may be integrated in the storage unit 6 or can be connected to the storage unit 6 via an interface. The storage unit 6 comprises a plurality of stacked storage modules 7 which can be disconnected from each other via separation switch units 8 which are controlled by the emergency shutdown control unit 5. The switch units 8-1, 8-2, ... 8-N are placed in between the storage modules 7-1, 7-2, ... 7-N as shown in Fig. 1. Each separated storage module 7 provides, in a possible embodiment, a maximum voltage which can be defined depending on a safety threshold voltage. For instance, a user sets a value of the safety threshold voltage for each storage modules 7 via a user interface. In an embodiment, the safety threshold voltage is the same for each of the storage modules 7. In another embodiment, the safety threshold voltage is different for each of the storage modules 7.

In an example, the user interface is integrated with the inverter unit 3. In another example, the user interface is integrated with the storage unit 6. In another example, the user interface is a wall-mounted device suitable positioned in a household such that the user, as needed or desired, can set the safety threshold voltage for each storage modules 7. The user interface can comprise a display screen, a touch screen or a touch pad, a microphone, buttons, lights, an augmented reality display device, a virtual reality display device or any combination thereof.

In a possible embodiment of the photovoltaic system 1 according to the first aspect of the present invention, one or more external trigger signals ts can be generated by different distributed signal sources 11. As shown in Fig. 1, the system 1 comprises one or more signal sources 11. In an embodiment, as shown in Fig. 1, a signal source 11 generates one or more external trigger signals ts. In another embodiment, a plurality of signal sources 11 generate the one or more trigger signals. The signal sources 11 are, for example, a plurality of household appliances, a fire alarm, a temperature sensor, etc.

In an example, the trigger signals generated by one or more signal sources 11 are prioritized based on one or more predefined conditions. The predefined conditions are, for example, based on a risk factor set by a user via the user interface.

The external trigger signals ts can be different depending on the use case. In a possible embodiment, the external trigger signals ts comprise sensor signals generated by local or remote sensors. These sensors can for instance comprise temperature sensors or any other kind of sensors adapted to detect an emergency situation in the surrounding of the photovoltaic system 1. The external trigger signals ts can also comprise control signals generated by a local or remote control unit connected to the controller of the inverter unit 3 via a data interface or a data network. Further, the trigger signals ts can comprise signals generated by local or remote user interfaces. These user interfaces can for instance comprise a fire or safety button pressed by a user in case of an emergency.

The trigger signals ts received by the controller of the inverter unit 3 are processed and evaluated to determine whether the photovoltaic system 1 is in an emergency state. In an alternative embodiment, the trigger signals ts can be forwarded by the controller of the inverter unit 3 to the processor of the emergency shutdown control unit 5. The emergency shutdown control unit 5 is adapted to process the received external trigger signals ts to perform a logic evaluation to determine whether the photovoltaic system 1 is in an emergency state or not. The processing and evaluation of the external trigger signals ts can be either performed by a processor or controller within the inverter unit 3 and/or by a processor or controller within the emergency shutdown control unit 5. For example, some external trigger signals ts might be evaluated or processed by a logic of the controller within the inverter unit 3 whereas other trigger signals ts are processed or evaluated by a processor of the controller within the emergency shutdown control unit 5. Further, results of the evaluation may be exchanged between the controller of the inverter unit 3 and the controller integrated in the emergency shutdown control unit 5 using PLC communication along the DC communication line provided between the inverter unit 3 and the emergency shutdown control unit 5.

In a possible embodiment, an emergency state of the photovoltaic system 1 can be notified by the controller of the inverter unit 3 to the emergency shutdown control unit 5 if a transmission signal transmitted periodically by the controller of the inverter unit 3 to the transceiver of the emergency shutdown control unit 5 is no longer received by the transceiver of the emergency shutdown control unit 5 for a predefined time period. If the emergency shutdown control unit 5 does not receive a transmission signal within the predefined time period, it can conclude that the photovoltaic system 1 is in an emergency state. In this way, the notification is fail-safe.

For instance, in case of a fire in the controller within the inverter unit 3, the inverter unit 3 itself maybe destroyed. Thus, a transmission of the specific transmission signal is terminated and this can be observed by the transceiver and controller of the emergency shutdown control unit 5. The use of PLC for communication between the controller of the inverter unit 3 and the controller of the emergency shutdown control unit 5 produces a robust and reliable communication.

In case of an emergency situation, for example, a fire or specific weather conditions like storm, rain, etc., or other natural calamities, a trigger signal ts is generated by, for example, weather sensors, and received by the controller of the inverter unit 3 and/or by the controller of the emergency shutdown control unit 5. The emergency shutdown control unit 5 then switches the storage unit 6 into a safe operation mode to reduce its output voltage and thus increasing the safety of the system 1.

In another instance, one of the signal sources is a manual switch which is operated by the user. The manual switch has, by default, the highest priority. The user, as needed or desired, can press the manual switch to generate the trigger signals in case of any emergency situation.

The storage unit 6 is divided into subunits formed by storage modules 7 wherein each storage module 7 has an upper voltage threshold. The individual subunits or storage modules 7 can be controlled by a controller of the inverter unit 3 and/or by a controller of the emergency shutdown control unit 3 in case of a detected emergency situation. In a possible embodiment, each subunit or storage module 7 of the storage unit 6 comprises a transceiver adapted to provide a bidirectional communication with the controller of the emergency shutdown control unit 5 and/or with the controller of the inverter unit 3. The transceivers of the different subunits or storage modules 7 can also communicate with each other.

The controller of the emergency shutdown control unit 5 can separate each storage module 7 from other storage modules 7 in case of an observed emergency state. This makes it safe to handle the different storage modules 7 of the storage unit 6.

In a preferred embodiment, a separation switch unit 8 is provided between two adjacent storage modules 7 of the storage module stack within the storage unit 6. The separation switch units 8 can be controlled by the emergency shutdown control unit 5 to disconnect the two adjacent stacked storage modules 7 from each other in case of an emergency situation.

In a further possible embodiment, the received external trigger signals ts are first processed by a controller of the inverter unit 3 and then the received information is transmitted by a PLC transceiver of the inverter unit 3 via the DC line 9 to a PLC transceiver of the emergency shutdown control unit 5 to trigger automatically the disconnection of the storage modules 7 of the storage unit 6. In a possible embodiment, the trigger signals can also be supplied via a data line or cable directly to the controller of the emergency shutdown control unit 5 to provide redundancy and a backup if the PLC communication fails. Accordingly, in this embodiment, a redundant communication can take place so that if one communication channel fails the controller of the emergency shutdown control unit 5 is still notified about the observed emergency state. A redundant communication can also be performed via a wireless communication link.

Fig. 2 shows a flowchart of a possible exemplary embodiment of a method for safe operation of a photovoltaic system 1 according to a further aspect of the present invention. In the illustrated embodiment, the computer-implemented method as illustrated in Fig. 2 comprises two main steps.

In a first step S1, one or more external trigger signals received from one or more signal sources are processed to determine automatically whether the photovoltaic system 1 is in an emergency state.

In a further step S2, a shutdown and/or a reduction of a voltage level of at least one storage module 7 within a storage unit 6 of the photovoltaic system 1 is performed if an emergency state of the photovoltaic system 1 has been determined in step S1 to provide a safe operation of the at least one storage module 7 of the storage unit 6 during the determined emergency state of the photovoltaic system 1.

The computer-implemented method illustrated in Fig. 2 can be performed in real time by one or more processors.

## Claims

1. A photovoltaic system (1) comprising
- at least one storage unit (6) having one or more storage modules (7) each adapted to store electrical power; **characterized by**
- an emergency shutdown control unit (5) adapted to initiate automatically a shutdown and/or reduce a voltage level of at least one of the storage modules (7) to provide a safe operation of said at least one storage module (7) if an emergency state of said photovoltaic system (1) is determined on the basis of one or more external trigger signals.

2. The photovoltaic system according to claim 1, wherein the emergency shutdown control unit (5) comprises a transceiver connected via a direct current (DC) line to an inverter unit (3) of said photovoltaic system (1).

3. The photovoltaic system according to claim 2, wherein the inverter unit (3) of the photovoltaic system (1) comprises an integrated controller adapted to receive the one or more external trigger signals via at least one interface of the inverter unit (3) from corresponding one or more signal sources.

4. The photovoltaic system according to claim 3, wherein the controller of the inverter unit (3) is adapted to process the received one or more external trigger signals to determine whether the photovoltaic system (1) is in an emergency state.

5. The photovoltaic system according to any of the preceding claims, wherein the controller of the inverter unit (3) is adapted to notify the emergency shutdown control unit (5) about the emergency state of the photovoltaic system (1) by means of powerline communication (PLC) via the DC line (9) provided between the inverter unit (3) and a PLC transceiver of the emergency shutdown control unit (5).

6. The photovoltaic system according to any of the preceding claims 1 to 5, wherein the emergency shutdown control unit (5) is integrated in the storage unit (6) or connected to the storage unit (6).

7. The photovoltaic system according to any of the preceding claims 1 to 6, wherein the storage unit (6) comprises a plurality of stacked storage modules (7) disconnectable from each other via separation switch units (8) controlled by the emergency shutdown control unit (5).

8. The photovoltaic system according to claim 7, wherein each separated storage module (7) provides a maximum voltage defined by a safety threshold voltage.

9. The photovoltaic system according to any of the preceding claims 1 to 8, wherein the one or more external trigger signals are generated by different distributed signal sources and supplied directly and/or indirectly via the controller of the inverter unit (3) to the emergency shutdown control unit (5) of the storage unit (6) of the photovoltaic system (1).

10. The photovoltaic system according to any of the preceding claims 1 to 9, wherein the one or more external trigger signals comprise sensor signals generated by local or remote sensors,
control signals generated by local or remote control units and/or generated by local or remote user interfaces.

11. The photovoltaic system according to any of the preceding claims 1 to 10, wherein the emergency state of the photovoltaic system (1) is notified by the controller of the inverter unit (3) to the emergency shutdown control unit (5) if a transmission signal transmitted periodically by the controller of the inverter unit (3) to the transceiver of the emergency shutdown control unit (5) is no longer received by the transceiver of the emergency shutdown control unit (5) for a predefined time period.

12. The photovoltaic system according to any of the preceding claims 1 to 11, wherein the emergency shutdown control unit (5) is adapted to process the external trigger signals by performing a logic evaluation to determine whether the photovoltaic system (1) is in an emergency state.

13. A storage unit (6) used in a photovoltaic system (1) according to any of the preceding claims 1 to 12, wherein the storage unit (6) comprises one or more storage modules (7) adapted to store electrical power; and
an emergency shutdown control unit (5) adapted to initiate automatically a shutdown and/or reduce a voltage level of the storage modules (7) of the at least one of storage unit (6) to provide a safe operation of the at least one of storage modules (7) if an emergency state of said photovoltaic system (1) is determined by the emergency shutdown control unit (5) on the basis of one or more external trigger signals.

14. The storage unit according to claim 13 wherein the emergency shutdown control unit (5) of the storage unit (6) comprises a PLC transceiver adapted to perform PLC communication with a controller of the inverter unit (3) of said photovoltaic system (1).

15. A method for safe operation of a photovoltaic system (1) comprising the steps of:
- processing (S1) one or more external trigger signals received from one or more signal sources to determine whether the photovoltaic system (1) is in an emergency state; and
- performing (S2) automatically a shutdown and/or reduce a voltage level of at least one storage module (7) of a storage unit (6) of said photovoltaic system (1) if an emergency state of the photovoltaic system (1) is determined to provide a safe operation of the at least one storage module (7) during the determined emergency state of said photovoltaic system (1).
